# EUROPEAN PATENT APPLICATION

(11) **EP 1 335 165 A1**
(43) Date of publication of application: **13.08.2003**
(21) Application number: 02075546.8
(22) Date of filing: 11.02.2002
(51) Int. Cl.: F24D 3/14

(54) **Element to be built in in floors, walls or cabinets**

(71) Applicant: Heluma n.v., 3500 Hasselt (BE)
(72) Inventor: Hoedemakers Robert, 3520 Zonhoven (BE)
(74) Representative: Callewaert, Jean

(57) **Abstract**

The invention concerns a built-in element which makes it possible to cool, heat and/or ventilate a room (27), provided with at least one fan (8) and at least one heat exchanger (7) so as to allow for a heat exchange between environmental air and a fluid, whereby said fan (8) produces an air stream along the heat exchanger (7) which is connected to a liquid circuit (15,16) which enables a hot or a cold fluid to flow through the heat exchanger (7) so as to heat, cool or ventilate said room (27) respectively. The invention also concerns a method for mounting such a built-in element.

## Description

The present invention concerns a built-in element which is to be built in in a floor or a wall and which makes it possible to cool, heat or ventilate a room, provided with at least one fan and at least one heat exchanger so as to make it possible to exchange heat between the environmental air and a fluid.

The known systems according to the state of the art which are, for example, built in in a floor, do not allow one and the same built-in element to provide for the heating, cooling and ventilation of a room.

Therefore, the invention aims to provide a simple built-in element that is easy to install which does make it possible.

To this aim, the above-mentioned fan produces an air stream along said heat exchanger which is connected to a liquid circuit which enables a hot or cold liquid to flow through the heat exchanger so as to heat, cool or ventilate said room respectively.

Practically, said liquid circuit contains a cold water circuit and a hot water circuit, whereby a valve is provided which works in conjunction with a control unit so as to make said heat exchanger co-operate with the cold water circuit or the hot water circuit.

In an advantageous manner, said heat exchanger will be elongated, whereby said fan extends over practically the entire length of the heat exchanger.

According to a preferred embodiment of the built-in element according to the invention, it has a detachable standing edge which extends over the circumference of said opening of the housing and which can be moved in relation to the housing.

In an advantageous manner, said standing edge will have a collar which is to rest on the floor surrounding the built-in element.

The invention also concerns a method for mounting a built-in element with a housing in a floor or in a wall, having a bottom surface and side walls connected thereto, whereby said side walls confine an opening extending on the top side of the housing, whereby a frame with a standing wall is further provided extending along the circumference of said opening, characterised in that the built-in element is placed on a base, and in that a cladding is provided on this base over at least the entire height of said housing and up to underneath the top edge of said frame, whereby this frame is subsequently moved almost diagonally in relation to the surface of the cladding until said edge extends almost at the height of the surface of the cladding.

Other particularities and advantages of the invention will become clear from the following description of a particular embodiment of the built-in element and the method according to the invention; this description is given as an example only and does not restrict the scope of the claimed protection in any way; the reference figures used hereafter refer to the accompanying drawings.

Figure 1 is a schematic top view of a built-in element according to the invention.

Figure 2 is a schematic cross section of a built-in element according to the invention.

Figure 3 is a schematic view in perspective representing the mounting of the built-in elements according to the invention in the floor of a room.

In the different drawings, the same reference figures refer to identical or analogous elements.

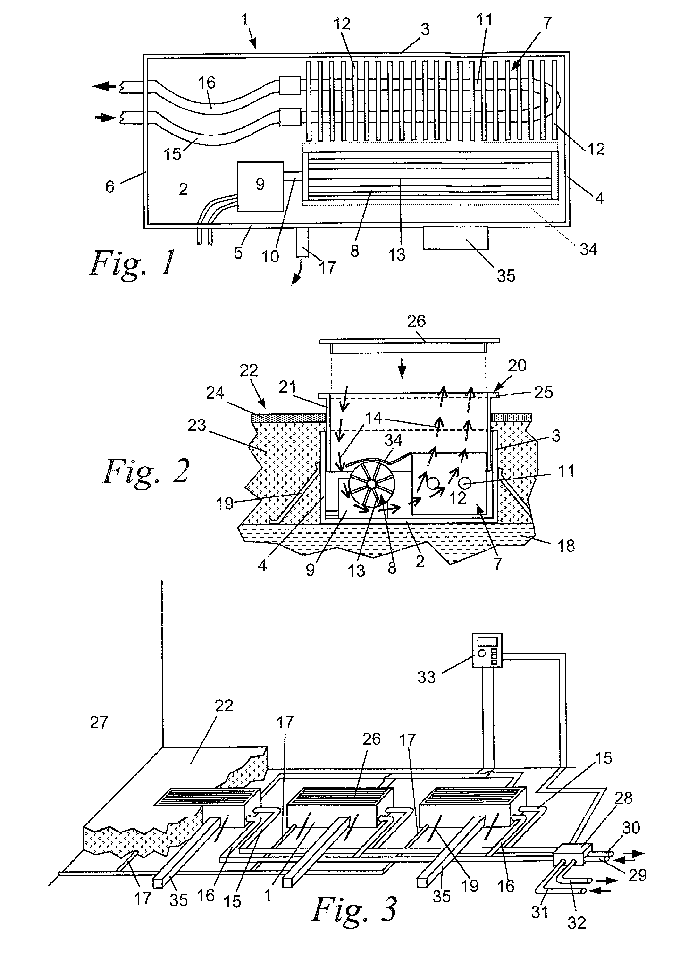

The built-in element, as represented in figures 1 and 2, comprises a rectangular housing 1 having a bottom surface 2 with four connecting side walls 3, 4, 5 and 6. Thus, these side walls 3, 4, 5 and 6 confine an opening extending at the top side of the housing 1. This housing 1 contains a heat exchanger 7 and a fan 8 which works in conjunction with an electric motor 9.

The heat exchanger 7 comprises a U-shaped liquid pipe 11 which is connected to heat-conductive plates 12 placed diagonally upon the latter. Thus, the heat exchanger 7 has the shape of a longitudinal beam. Preferably, both the liquid pipe 11 and said plates 12 are made of metal. Of course it is possible, in order to improve the heat exchange, to equip the heat exchanger 7 with several U-shaped liquid pipes 11 which are connected to said plates 12.

The fan 8 has a central shaft 10 which is driven by the above-mentioned motor 9. In order to produce an air stream along the heat exchanger 7 by means of this fan 8, the latter contains blades 13 in the shape of lamellas which extend almost parallel to the shaft 10 thereof.

Further, a screening cap 34 is provided above the fan 8. This screening cap 34 extends at a certain distance from the corresponding side wall 5 of the housing 1, almost up to said heat exchanger 7, such that, when the fan 8 is working, a forced air stream will be created as is represented by the arrows 14. In particular, environmental air is hereby drawn in by the fan 8 from the space situated above the housing 1, whereby this air then flows, in a direction across the shaft of the fan 8, along said heat exchanger 7 and is then sent back to the above-lying space. Thus is created a heat exchange between this environmental air and the heat exchanger 7.

The heat exchanger 7 is connected to a liquid circuit via a supply line 15 and a discharge line 16, extending through the side wall 6 of the housing 1. It is possible to make a hot or a cold fluid, such as for example water, flow through the heat exchanger 7 via this liquid circuit.

In order to discharge condensation, which is possibly formed when a cold fluid flows through the heat exchanger 7, a recess is provided near the bottom surface 2 in the side wall 5 of the housing 1. In this recess is mounted a little tube 17 which is to be connected to the discharge line for condensation. Possibly, this little tube 17 can be connected to a recess provided in the side wall 3 next to the heat exchanger 7.

When the built-in element according to the invention is built in in a floor, it will be placed on a base 18, whereby one has to make sure that the top edges of said side walls 3, 4, 5 and 6 extend in an almost horizontal plane. Side supports 19 are hereby provided on the side walls 3, 4, 5 and 6 of the housing 1 resting on said base 18. This is schematically represented in figure 2.

Further, the built-in element has a detachable rectangular frame 20 with a standing wall 21 extending in the housing 1 according to the circumference of said opening. This opening is confined by the above-mentioned side walls 3, 4, 5 and 6. The frame 20 can be moved in relation to the housing 1, whereby said wall 21 slides along the inside of the side walls 3, 4, 5 and 6.

Thus, when the built-in element according to the invention is being mounted, this built-in element will be placed on a base 18, whereby said frame 20 is brought in such a position that the top edge thereof will be situated at a certain distance above the above-mentioned side walls 3, 4, 5 and 6, and such that the wall 21 of the frame 20 will partly overlap with these side walls 3, 4, 5 and 6.

Next, a floor 22 is provided on the base 18. The above-mentioned supports 19 hereby form an anchorage for the built-in element in the floor 22. This floor 22 consists for example of a cover layer 23 upon which is provided a floor covering 24 and it extends at least up to above the side walls 3, 4, 5 and 6 of the housing 1 and up to preferably a small distance under the top edge of the frame 20.

After the floor 22 has thus been provided, the frame 20 is moved almost diagonally down in relation to the surface of the floor 22 until the above-mentioned edge extends almost at the height of the surface of the floor 22. As is represented in figure 2, this edge of the frame 20 forms a collar 25 which, after the frame has been moved down, rests on the surface of the floor 22.

When the built-in element according to the invention is mounted in this manner in a floor 22, the finishing of the built-in element in relation to the surface of the floor 22 will be almost perfect. In particular, this method makes it possible to place such built-in elements for example on a rough base 18, whereby the required level of the floor 22 has to be taken into account only to a limited extent. Thus, when placing built-in elements according to the invention, one only has to make sure that the housing 1 thereof is situated under the required level of the floor 22, and it is not necessary for these built-in elements to be all situated in one and the same horizontal plane. After the floor 22 has been provided, the frame 20 with the collar 25 is moved up against the floor 22, so that it becomes possible to compensate for a variable distance between the housing 1 and the floor surface.

In order to protect the top side of the built-in element, a grate 26 is provided on it. This grate 26 is mounted in particular on said frame 20.

Figure 3 schematically represents an example of an installation with several built-in elements in a room 27 according to the invention.

Before providing a floor 22, the built-in elements according to the invention are placed such on the base 18 that the above-mentioned side walls 3, 4, 5 and 6 of the housing 21 thereof stand almost vertical. The above-mentioned supply line 15 and the above-mentioned discharge line 16 of each built-in element is hereby connected to a valve 28 which co-operates with a liquid circuit. This liquid circuit in particular comprises a hot water circuit and a cold water circuit which are each connected to said valve 28 via a supply line 29, 31 respectively, and a discharge line 30, 32 respectively.

The hot water circuit can for example work in conjunction with a burner of a conventional central heating unit in a house, whereas the cold water circuit works in conjunction with a cooling plant.

Said valve 28 is controlled by a control unit 33 which, depending on the required temperature in said room 27, makes sure that the heat exchangers 7 of the built-in elements are connected to the cold water circuit or the hot water circuit.

The valve 28 can possibly be replaced by a pump known as such which makes sure that water flows from the required circuit towards the built-in elements.

Further, an electric connection is provided between said control unit 33 and each of the motors 9 of the fans 8 of the built-in elements. Thus, by means of said control unit 33, the air flow of the fans 7 can be adjusted as a function of the required air circulation and/or temperature.

Via the tubes 17, which are connected to a discharge line, condensation which is possibly formed in the housing 1 is discharged outside the room 27.

Further, on the side wall 5 of the built-in element, near said fan 8, a vent pipe 35 is connected to the housing 1. This vent pipe 35 opens outside the room 27, so that outside air is supplied to the room 27. As a result, this makes it possible to ventilate the room 27. In an advantageous manner, a cut-off valve will be provided, not represented in the figures, which makes it possible to cut off the vent pipe, such that the fan 8 only sucks in air from the room 27 and leads it back into the room via the heat exchanger 7. This cut-off valve is operated in advantageous manner by means of the above-mentioned control unit 33.

According to a variant to this embodiment of the built-in element according to the invention, the tubes 17 form a supply duct for ventilation air. In particular, fresh air can be supplied in the room 27 via these tubes 17.

After the above-described connections have been realised, a floor 22 can be provided, such that the different electrical connections and water pipes are situated under this floor 22.

In order to produce as little noise as possible, a direct-current motor will be preferably used as a motor 9 for the fan 8 as mentioned above, with a rated revolution of 1,800 revolutions per minute, whereby one has to make sure that this fan operates at a rotational speed of maximally 800 revolutions per minute, so that it is almost silent.

Further, the housing of the built-in element is preferably made of an inert material such as plastic. Thus, it becomes possible to avoid corrosion due to any condensation arising while the built-in element is operating.

The heat exchanger 7 and the fan 8 are preferably mounted in said housing in a detachable manner. Thus, it is possible to clean the built-in element in a simple manner or to possibly do some repair work after the grate 26 has been removed. In an advantageous manner, the heat exchanger 7 and the fan 8 are fastened to the bottom surface 2 of the housing 1 by means of clips.

Although, in the accompanying figures and in the preceding description of the invention, a built-in element is described which is mounted in a floor, it is clear that this built-in element can also be placed in a wall. Thus, the housing 1 is fixed in or against a wall, such that the top edges of said side walls 3, 4 , 5 and 6 will be situated in a plane which is parallel to the wall. Said frame 20 is then placed in the housing 1, such that it protrudes somewhat in relation to the housing 1. After a wall cladding, such as for example plaster, has been provided on the wall, the frame 20 is shifted until its edge, in particular the above-mentioned collar 25, rests against this wall cladding.

Naturally, the built-in element and the method for mounting the built-in element according to the invention are not limited to the above-described embodiment, represented in the accompanying drawings.

Thus, the heat exchanger 7 and the fan, as well as the housing 1, may have all sorts of shapes and dimensions. The housing 1 may for example consist of a standing cylinder, whereby the heat exchanger extends according to the circumference of this cylinder and the fan is placed in the middle of this housing.

## Claims

1. Built-in element which makes it possible to cool, heat and/or ventilate a room (27), provided with at least one fan (8) and at least one heat exchanger (7) so as to allow for a heat exchange between environmental air and a fluid, whereby said fan (8) produces an air stream along the heat exchanger (7) which is connected to a liquid circuit (15,16) which enables a hot or a cold fluid to flow through the heat exchanger (7) so as to heat, cool or ventilate said room (27) respectively.

2. Built-in element according to claim 1, **characterised in that** said liquid circuit contains a cold water circuit (29,30) and a hot water circuit (31,32), whereby a valve (28) is provided working in conjunction with a control unit (33) so as to make said heat exchanger (7) co-operate with the cold water circuit (29,30) or the hot water circuit (31,32).

3. Built-in element according to claim 1 or 2, **characterised in that** said heat exchanger (7) is longitudinal, whereby said fan (8) extends over almost the entire length of the heat exchanger (7).

4. Built-in element according to any of claims 1 to 3, **characterised in that** the shaft (10) of said fan (8) extends almost parallel to the heat exchanger (7), whereby the latter makes it possible to produce an air stream, mainly in a direction across said shaft (10).

5. Built-in element according to any of claims 1 to 4, **characterised in that** it has a housing (1) with a bottom surface (2) and with side walls (3,4,5,6) connecting thereto, comprising said fan (8) and said heat exchanger (7), whereby this housing (1) has an opening on its top side.

6. Built-in element according to claim 5, **characterised in that** said housing (1) is provided with a recess forming a discharge duct (17) for condensation.

7. Built-in element according to claim 6, **characterised in that** it is provided with a vent pipe (35) for the supply of ventilating air.

8. Built-in element according to any of claims 5 to 7, **characterised in that** it has a detachable frame (20) extending along the circumference of said opening of the housing (1) and which can be moved in relation to the housing (1).

9. Built-in element according to claim 8, **characterised in that** said frame has a collar (25) which is to rest on the cladding (22) surrounding the built-in element.

10. Method for mounting a built-in element with a housing (1) in a floor or in a wall, having a bottom surface (2) and connecting side walls (3,4,5,6), whereby said side walls (3,4,5,6) confine an opening extending on the top side of the housing (1), whereby a frame (20) with a standing wall (21) is further provided, extending along the circumference of said opening, **characterised in that** the built-in element is placed on a base (18) and **in that** a cladding (22) is provided on this base (18) over at least the entire height of said housing (1) and up to underneath the top edge (25) of said frame (20), whereby this frame (20) is then moved almost diagonally in relation to the surface of the cladding (22) until said edge (25) extends almost at the height of the surface of the cladding (22).

11. Method according to claim 10, **characterised in that** said built-in element is mounted in a floor (22), whereby said cladding (22) is formed by casting what is called a cover layer (23) and by providing a floor covering (24) upon it.

12. Method according to claim 10, **characterised in that** said built-in element is mounted in a wall, whereby said cladding (22) is formed by providing plaster on said base (18).
